(19) Europäisches Patentamt
European Patent Office
Office européen des brevets

(11) **EP 3 299 299 B1**

(12) **EUROPEAN PATENT SPECIFICATION**

(45) Date of publication and mention
of the grant of the patent:
**24.03.2021 Bulletin 2021/12**

(51) Int Cl.:
*B64D 45/08* *(2006.01)*     *G08G 5/04* *(2006.01)*
*G06T 7/32* *(2017.01)*     *H04N 13/243* *(2018.01)*
*G06K 9/00* *(2006.01)*     *G08G 5/00* *(2006.01)*
*G06T 7/593* *(2017.01)*

(21) Application number: **17193259.3**

(22) Date of filing: **26.09.2017**

(54) **APPARATUS AND METHOD OF COMPENSATING FOR RELATIVE MOTION OF AT LEAST TWO AIRCRAFT-MOUNTED CAMERAS**

VORRICHTUNG UND VERFAHREN ZUR KOMPENSATION FÜR EINE RELATIVE BEWEGUNG VON MINDESTENS ZWEI FLUGZEUGMONTIERTEN KAMERAS

APPAREIL ET PROCÉDÉ DE COMPENSATION DE MOUVEMENT RELATIF D'AU MOINS DEUX CAMERAS MONTÉES SUR UN AÉRONEF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.09.2016 US 201615277411**

(43) Date of publication of application:
**28.03.2018 Bulletin 2018/13**

(73) Proprietor: **The Boeing Company**
**Chicago, IL 60606-1596 (US)**

(72) Inventors:
• **ARMATORIO, Andy**
**Huntington Beach, CA 92647 (US)**
• **LOFTIS, Richard J.**
**Huntington Beach, CA 92647 (US)**
• **RAY, Gary A.**
**Huntington Beach, CA 92647 (US)**
• **NGUYEN, Tuan A.**
**Huntington Beach, CA 92647 (US)**
• **HIGGINS, Robert P.**
**Huntington Beach, CA 92647 (US)**

(74) Representative: **Howson, Richard Giles Bentham et al**
**Kilburn & Strode LLP**
**Lacon London**
**84 Theobalds Road**
**London WC1X 8NL (GB)**

(56) References cited:
EP-A2- 1 087 626     DE-A1-102008 024 308
DE-A1-102008 046 545     US-A- 5 581 250
US-A1- 2011 184 647     US-A1- 2015 329 217

**Description**

FIELD

The present application relates to aircraft-mounted cameras, and is particularly directed to apparatus and method of compensating for relative motion of at least two aircraft-mounted cameras.

BACKGROUND

An aircraft may include two cameras that are used as part of an object detection and collision avoidance system, for example. In this example application, one camera can be mounted on a portion of an aircraft wing, and the other camera can be mounted on a portion of another aircraft wing. Since the aircraft wings flex and the cameras are relatively far apart from each other, the distance and orientation between the cameras can vary greatly due to wing vibrations, for example, during flight. As a result of the variations in distance and orientation between the cameras, the system is unable to stereoscopically accurately determine the position of an object, such as a bird, approaching the aircraft to avoid a collision with the object. It would be desirable to provide an apparatus and method in which the varying distances and orientations between the two aircraft-mounted cameras are compensated so that the system is able to accurately determine the position of an object approaching the aircraft.

DE 102008024308 describes a method involving calculating the distance or position of a target on both the blades of an aircraft from the angles by two sensors. The sensors are infrared sensors. The position of the sensors is detected and is considered in the computation of distance or position of the target.

DE 102008046545 describes a method that involves detecting environment of a vehicle according to multiple image detection units, whose detection area partially overlaps and forms overlapping areas. The image detection units are calibrated by distinctive points or edges on the vehicle. The image detection units are calibrated by distinctive points or lines on a roadway, which are detected by the image detection units. There is provided a device for executing a method for calibrating an assembly for monitoring an environment of a vehicle.

EP1087626 describes a distance correcting apparatus of a surroundings monitoring system includes a stereo imaging means for stereoscopically taking a pair of images of a frontal scenery, a parallax calculating means for calculating a parallax based on the pair of images, a distance calculating means for calculating a distance to an object based on the parallax and a parameter for correcting distance, an approximation line calculating means for calculating a plurality of approximation lines extending in the distance direction in parallel with each other based on the images, a vanishing point calculating means for calculating a vanishing point of the images from a point of intersection of the approximation lines and a parameter correcting means for correcting the parameter based on the calculated vanishing point.

US5581250 describes a collision avoidance ability for UAV during its non-VFR pre-programmed autonomous flight which is achieved by using a forward-looking TV camera which senses visual obstacles in direction of flight. The UAV is equipped with an autopilot which is able of maneuvering and incorporated in a form of flight/mission computer's program. Image processor locks and tracks obstacles in the camera's field of view in real time. It provides the autopilot with information about level of threat and generates appropriate commands. Being warned by the TV camera, flight/mission computer initiates appropriate maneuver, in order to avoid possible collision. After that, it returns to interrupted pre-programmed flight. Two forward-looking TV cameras are used to measure a distance between the UAV and the obstacle considering that the level of threat is higher if this distance is less.

US2011184647 describes a Widefield Airspace Imaging and Navigation System to provide UASs with wide field airspace imaging and collision avoidance capabilities. An array of optical lenses are distributed throughout the aircraft to provide an unobstructed view in all directions around the aircraft. Each collection lens is coupled through an optical fiber to a camera that multiplexes the several images. A processing system is connected to the wide array imaging system, and it runs an image interpolation program for resolving a background image and for distinguishing objects that are not moving with the background. In addition, a navigation control program reads the image interpolation software and, upon detection of an approaching object, implements a rule-based avoidance maneuver by sending an appropriate signal to the existing UAS autopilot.

US2015329217 describes a system which is configured to generate and display information regarding a strike zone of an aircraft. In some examples, a system is configured to generate and display an image of an environment around an aircraft together with a graphical indication of a strike zone of the aircraft, where the indication is scaled to reflect the strike zone at a distance range of one or more detected objects.

SUMMARY

In one aspect, there is provided a method according to claim 1.
In another aspect there is provided an apparatus according to claim 5.

The method comprises correlating captured images from the left wing-mounted camera against a left nose template associated with a left aircraft wing, transforming image data from at least one image frame captured by the left wing-mounted camera to eliminate relative motion associated with motion of the left aircraft wing, correlating captured images from the right wing-mounted camera against a right nose template associated with a right aircraft wing, and transforming image data from at least one image frame captured by the right wing-mounted camera to eliminate relative motion associated with motion of the right aircraft wing.

Other aspects will become apparent from the following detailed description, the accompanying drawings and the appended claims.

BRIEF DESCRIPTION OF THE DRAWINGS

Fig. 1 is a schematic diagram of an example aircraft embodying an aircraft-mounted object detection and collision avoidance system in accordance with an example implementation.

Fig. 2 is a block diagram of the aircraft-mounted object detection and collision avoidance system of Fig. 1, and showing an apparatus constructed in accordance with an embodiment.

Fig. 3 is an image of the left side of the nose of the example aircraft of Fig. 1 from a camera mounted on a left aircraft wing.

Fig. 4 is an image of the right side of the nose of the example aircraft of Fig. 1 from a camera mounted on a right aircraft wing.

Figs. 5A, 5B, and 5C are a series of images from the camera mounted on the right aircraft wing of Fig. 4, and showing the effect of wing relative motion on the position of the nose of the aircraft.

Fig. 6 is a compensated image showing the effect of image transformation that removes the effect of wing relative motion shown in Figs. 5A, 5B, and 5C.

Fig. 7 is a flow diagram depicting an object detection and collision avoidance method in which no motion compensation method is implemented.

Fig. 8 is a flow diagram depicting the object detection and collision avoidance method of Fig. 7 in which a motion compensation method in accordance with an embodiment is implemented.

Fig. 9 is a coordinates diagram of an example scenario showing (x, y, z) distance coordinates of an object relative to a camera mounted on a left aircraft wing and another camera mounted on a right aircraft wing.

DETAILED DESCRIPTION

The present application is directed to an apparatus and method of compensating for relative motion of at least two aircraft-mounted cameras. The specific apparatus, motion compensation methods, and the industry in which the apparatus and motion compensation methods are implemented may vary. It is to be understood that the disclosure below provides a number of embodiments or examples for implementing different features of various embodiments. Specific examples of components and arrangements are described to simplify the present disclosure. These are merely examples and are not intended to be limiting.

By way of example, the disclosure below describes an apparatus and motion compensation methods for aircraft in compliance with Federal Aviation Administration (FAA) regulations. Specifications of FAA regulations are known and, therefore, will not be described.

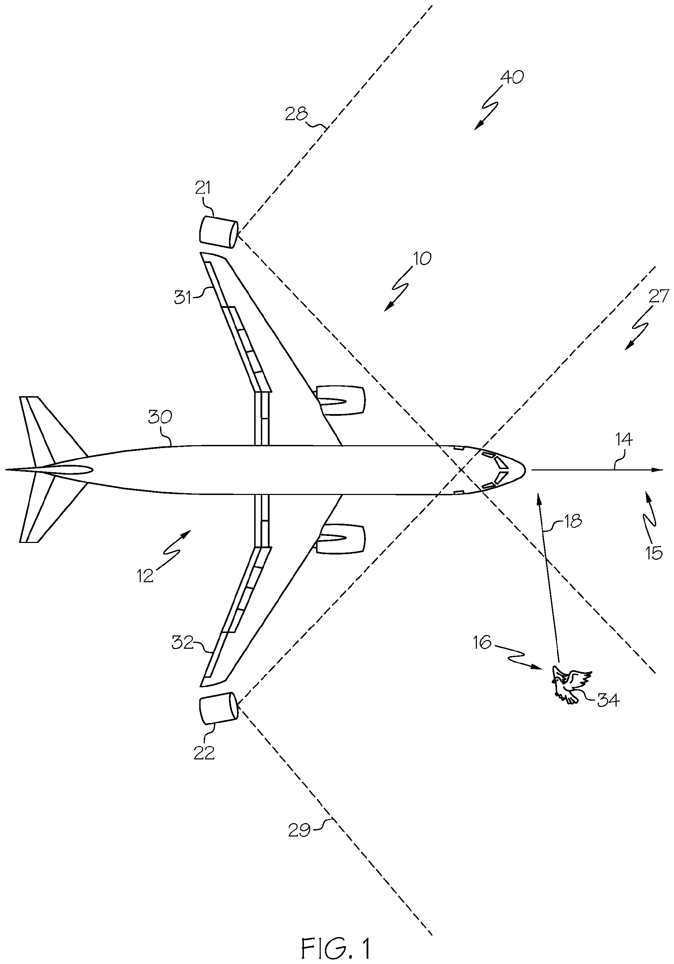

Referring to Fig. 1, an aircraft-mounted object detection and collision avoidance system, generally designated 10, embodying an apparatus in accordance with an example implementation, may be used in association with a vehicle 12. The vehicle 12 may be moving along a path (e.g., in the direction indicated by direction arrow 14). An object 16 may be moving along a path (e.g., in a direction indicated by arrow 18). Depending upon the relative positions and/or relative movements of the vehicle 12 and/or the object 16, the object 16 may impact with (e.g., strike) the vehicle 12. Those skilled in the art will appreciate that the vehicle 12 and object 16 may not necessarily be shown to scale in Fig. 1.

In the example implementation illustrated in Fig. 1, the vehicle 12 may be any type of aircraft 30. For example and without limitation, the aircraft 30 may be a fixed wing, a rotary wing, or a lighter than air aircraft. The aircraft 30 may be manned or unmanned. As an example, the aircraft 30 may be a commercial passenger aircraft operated by an airline, a cargo aircraft operated by a private or public entity, a military aircraft operated by a military or other government organization, a personal aircraft operated by an individual, or any other type of aircraft operated by any other aircraft operator. As another example, the aircraft 30 may be an unmanned aerial vehicle (UAV) operated by a remote operator. Thus, those skilled in the art will appreciate that the vehicle 12 (e.g., aircraft 30) may be designed to perform any mission and may be operated by any operator of the vehicle 12.

The object 16 may be any object that may potentially strike the vehicle 12. As an example, the object 16 may be any moving airborne object moving along the path 18 that may intersect the path 14 of the vehicle 12. For example, as illustrated in Fig. 1, the object 16 may be a bird 34. As another example and without limitation, the object 16 may be another aircraft, or any other airborne man-made or natural object.

Throughout the present disclosure, the terms "strike", "struck", "collision", "collide" and any similar or related terms may refer to the impact of the vehicle 12 and the object 16. For example, the phrase "an object striking or potentially striking a vehicle" may refer to a moving vehicle 12 impacting with a moving object 16 (e.g., an airborne object).

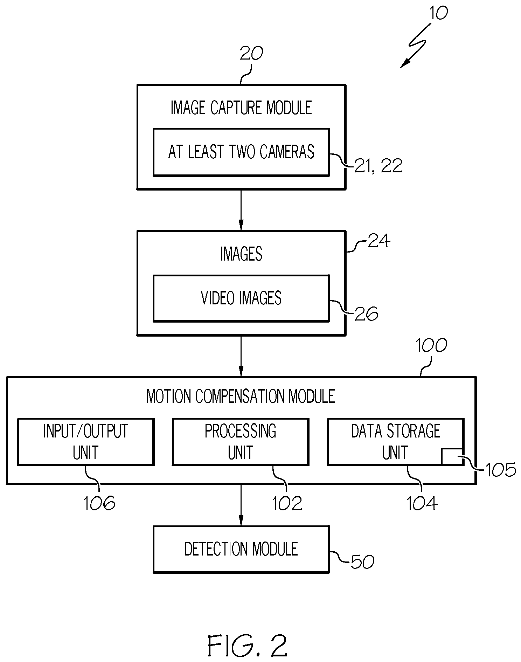

Referring to Fig. 2, the system 10 may include at least one image capture module 20. The image capture module 20 may be connected to the vehicle 12 (e.g., aircraft 30) shown in Fig. 1. The image capture module 20 includes at least two cameras 21, 22 configured to obtain image data representative of images 24. In an example implementation, each of the at least two cameras 21, 22 comprises a wide field of view camera (i.e., greater than 90 degrees). The at least two cameras 21, 22 may include the same type of cameras or a number of different types of cameras. For example, the at least two cameras 21, 22 may include one or more video cameras. For simplicity and clarity of discussion, only the two cameras 21, 22 will be discussed herein.

The two cameras 21, 22 may operate over any range or ranges of wavelengths and/or frequencies to obtain images 24 (e.g., video images 26). For example and without limitation, the two cameras 21, 22 may be configured to obtain images 24 at infrared, near infrared, visible, ultraviolet, other wavelengths, or combinations of wavelengths. The two cameras 21, 22 may be configured to obtain images 24 from light that is polarized.

For example, the two cameras 21, 22 may include one or more long-wavelength infrared ("LWIR") cameras. As another example, the two cameras 21, 22 may include one or more med-wavelength infrared ("MWIR") cameras. As another example, the two cameras 21, 22 may include one or more short-wavelength infrared ("SWIR") cameras. As still another example, the two cameras 21, 22 may include a combination of one or more long-wavelength infrared cameras, med-wavelength infrared cameras, and short-wavelength infrared cameras.

In an example implementation, the images 24 may be video images 26. The video images 26 may include a sequential series of digital video image frames taken rapidly over a period of time (e.g., 30 Hz). The images 24 provided by the two cameras 21, 22 may be used to detect the presence of one or more objects 16 and to identify one or more characteristics of the object 16.

Referring back to Fig. 1, the image capture module 20 may include a field of view 40. For example, the two cameras 21, 22 may include the field of view 40. For example, the two cameras 21, 22 may be mounted on the vehicle 12 looking forwardly and having an unobstructed field of view 40 (e.g., the field of view 40 not obstructed by the vehicle 12). The field of view 40 may be defined by a target area 15 in front of the vehicle 12 (e.g., aircraft 30) between lines 28 and 29 (e.g., in the direction of movement 14 of the vehicle 12). For example, the target area 15 may include a cone extending forward of the vehicle 12. The object 16 (e.g., the bird 34) may be within the field of view 40. Therefore, the images 24 from the at least two cameras 22 may include images of the object 16.

In an example implementation, the two cameras 21, 22 may include a combined field of view. In another example implementation, the two cameras 21, 22 may include an overlapping field of view 27. For example, the two cameras 21, 22 may be used including an overlapping field of view 27 in order for the system 10 to determine the distance of the object 16 relative to the vehicle 12 using a stereo solution (e.g., stereo vision).

The two cameras 21, 22 may be mounted to the vehicle 12 at any suitable or appropriate location. For simplicity and purposes of description herein, one camera 21 is mounted to the end of one wing 31 of the aircraft 30 and the other camera 22 is mounted to the end of the other wing 32 of the aircraft 30, as schematically shown in Fig. 1. Those skilled in the art will appreciate that the two cameras 21, 22 may be mounted to the vehicle (e.g., aircraft 30) at any other suitable or appropriate location.

The two cameras 21, 22 of the image capture module 20 may be connected to the vehicle 12 at various positions and orientations. The two cameras 21, 22 may face in any appropriate direction. For example, the two cameras 21, 22 may generally face forward on the vehicle 12 (e.g., in the direction of movement 14) in order to view the object 16 in the path of the vehicle 12 or crossing the path of the vehicle 12 (e.g., within the field of view 40).

Referring again to Fig. 2, the system 10 may include a detection module 50. The detection module 50 may be configured to receive the images 24 transmitted by the image capture module 20. The detection module 50 may be configured to process the images 24 and determine the presence of the object 16 and whether the object 16 is likely to strike the vehicle 12. The detection module 50 may also be configured to identify and/or determine various characteristics of the object 16 based on the images 24. The detection module 50 may also be configured to determine various characteristics of a potential strike.

However, before the detection module 50 processes the images 24, the images 24 are processed by an apparatus including a motion compensation module 100 constructed in accordance with an embodiment. The motion compensation module 100 includes a processing unit 102 that executes instructions stored in an internal data storage unit 104, an external data storage unit (not shown), or a combination thereof. The processing unit 102 may comprise any type of technology. For example, the processing unit 102 may comprise a dedicated-purpose electronic processor. Other types of processors and processing unit technologies are possible. The internal data storage unit 104 may comprise any type of technology. For examples, the internal data storage unit 104 may comprise random access memory (RAM), read only memory (ROM), solid state memory, or any combination thereof. Other types of memories and data storage unit technologies are possible.

The motion compensation module 100 further includes a number of input/output (I/O) devices 106 that may comprise any type of technology. For example, the I/O devices 106 may comprise a keypad, a keyboard, a touch-sensitive display screen, a liquid crystal display (LCD) screen, a microphone, a speaker, or any combination thereof. Other types of I/O devices and technologies are possible.

The motion compensation module 100 processes the images 24 to compensate for variations in distance and orientation (e.g., rotation) between the two cameras 21, 22 mounted on the ends of the wings 31, 32 of the aircraft 30 due to flexing motion of at least one of the wings 31, 32. More specifically, the processing unit 102 executes instructions of a motion compensation program 105 stored in the data storage unit 104 to compensate for the variations in the distance and orientation between the two cameras 21, 22 due to the flexing motion of one or both of the wings 31, 32. Operation of the motion compensation module 100 is described hereinbelow.

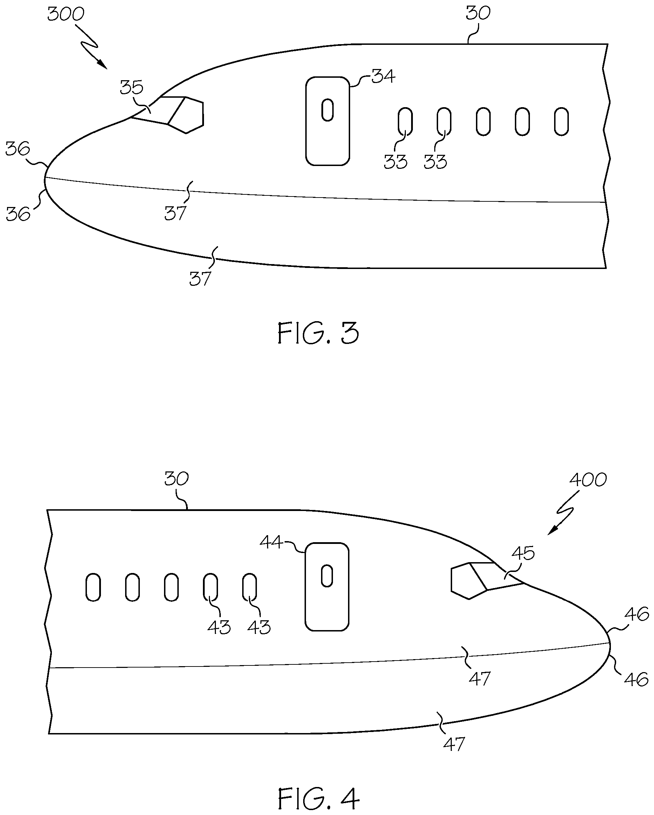

Referring to Fig. 3, the image 300 shows a number of different features of the aircraft 30 visible form a camera mounted on the left wing. The features of the image 300 include passenger window features 33, aircraft door features 34, pilot window features 35, fuselage features 36, and aircraft livery features 37. These are only example features of the aircraft 30. Other types of features are possible. The features in the image 300 produce non-trivial correlations for purpose of relative motion compensation.

Referring to Fig. 4, the image 400 shows a number of different features of the aircraft 30 visible from a camera mounted on the right wing. The features of the image 400 include passenger window features 43, aircraft door features 44, pilot window features 45, fuselage features 46, and aircraft livery features 47. These are only example features of the aircraft 30. Other types of features are possible. The features in the image 400 produce non-trivial correlations for purpose of relative motion compensation.

It should be apparent that the image 300 from the camera 21 on the left aircraft wing 31 and the image 400 from the camera 22 on the right aircraft wing 32 are similar. The two images 300, 400 are processed by the motion compensation module 100 in the same way. For simplicity, image processing of the image 400 from the camera 22 on the right aircraft wing 32 will be described in detail. It is understood that the same image processing details apply to the camera 21 on the left aircraft wing 31.

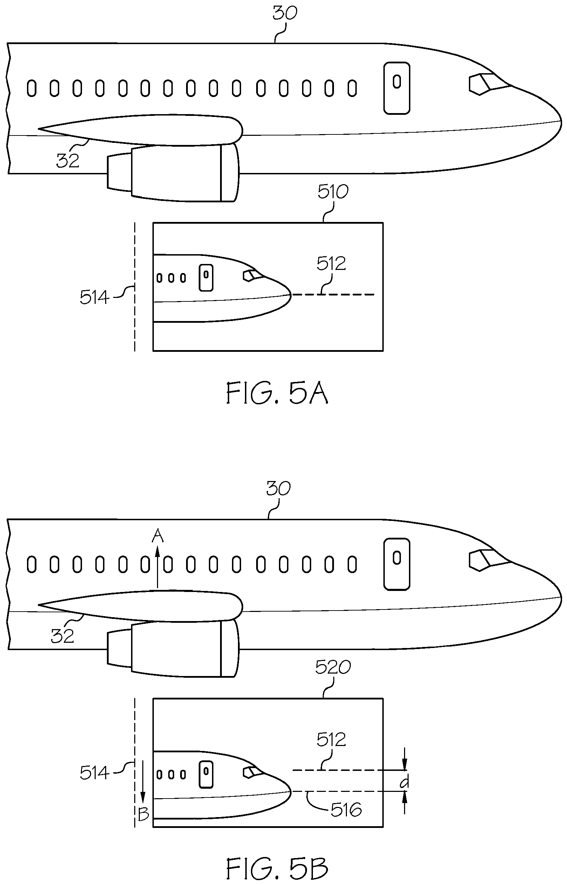

Referring to Fig. 5A, an image 510 from the camera 22 mounted on the right aircraft wing 32 with no right-wing motion (e.g., a neutral wing condition or no flexing of the right wing 32) is illustrated. This is the reference image of the right side of the aircraft, and is the image that all in-flight images from the right wing camera are correlated with to determine motion. This image is captured at the time of stereo calibration of the two, or more, cameras being used in the stereo ranging process. In the image 510, the tip of the nose of the aircraft 30 aligns parallel with an original horizontal reference line 512 (shown as a dashed line). Also, in the image 510, the nose of the aircraft 30 aligns perpendicular with an original vertical reference line 514 (also shown as dashed line).

Referring to Fig. 5B, an image 520 from the camera 22 mounted on the right aircraft wing 32 with right-wing motion in the upward direction (as shown by arrow "A" in Fig. 5B) is illustrated. When the right wing 32 moves in the upward direction (i.e., one type of flexed wing condition), the camera 22 captures a different image, which is shown as the image 520 in Fig. 5B. The image 520 shows the tip of the nose of the aircraft 30 and features of the aircraft 30 shifted downward (as shown by arrow "B" in Fig. 5B). In the image 520, the tip of the nose of the aircraft 30 aligns with an offset horizontal reference line 516 (shown as a dashed line). This offset horizontal reference line 516 is offset from the original horizontal reference line 512 by a distance of *"d"* shown in Fig. 5B. The offset distance *"d"* depends upon a number of factors including the length of the right wing 32, for example.

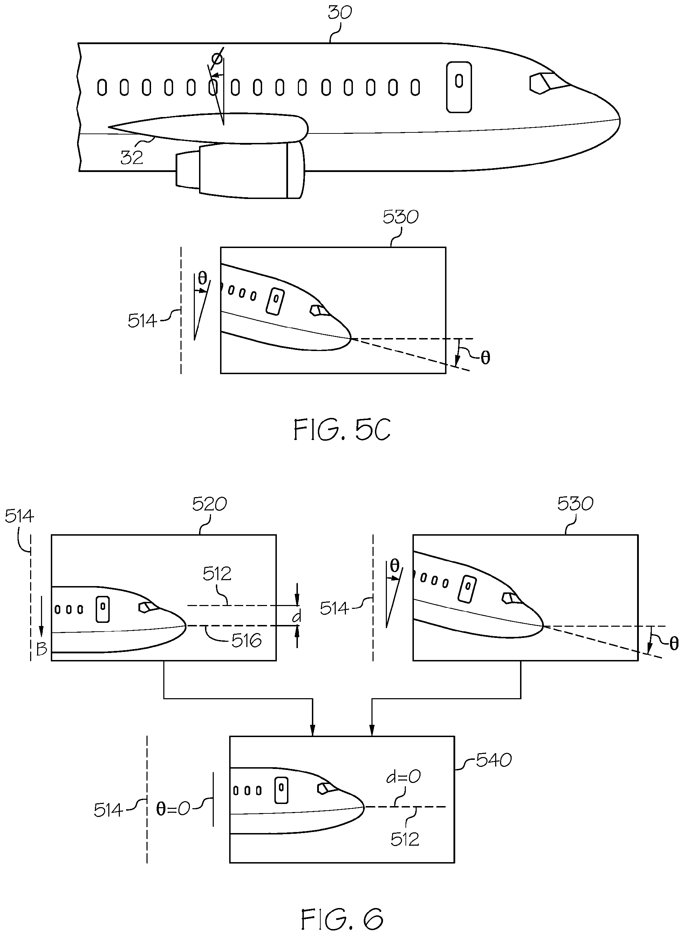

Referring to Fig. 5C, an image 530 from the camera 22 mounted on the right aircraft wing 32 with right-wing motion in a counter-clockwise twist direction (as shown by offset angle "$\phi$" in Fig. 5C) is illustrated. When the right wing 32 twists in the counter-clockwise direction (i.e., another type of flexed wing condition), the camera 22 mounted on the right aircraft wing 32 captures a different image, which is shown as the image 530 in Fig. 5C. In the image 530, the tip of the nose of the aircraft 30 pivots in a clockwise twist direction (as shown by offset angle "$\theta$" in the image 530 in Fig. 5C). The offset angle of "$\theta$" in the image 530 and the offset angle "$\phi$" on the right wing 32 should be about the same.

It should be apparent that Figs. 5A, 5B, and 5C show a series of images captured by the camera 22 mounted on the right aircraft wing 32, and the effects of wing relative motion on the captured images. The image 510 of Fig. 5A shows no wing motion, the image 520 of Fig. 5B shows an upward wing motion, and the image 530 of Fig. 5C shows a counter-clockwise twisting wing motion. Other motions are similarly determined.

Referring to Fig. 6, a compensated image 540 showing the effect of image transformation that removes the effect of wing relative motion of Figs. 5B, and 5C is illustrated. The compensated image 540 is the result of transforming the image 520 of Fig. 5B and transforming the image 530 of Fig. 5C. As shown in Fig. 6, the compensated image 540 shows the offset distance of "$d$" in the image 520 (Fig. 5B) being reduced to zero, and shows the offset angle "$\theta$" in the image 530 (Fig. 5C) being reduced to zero.

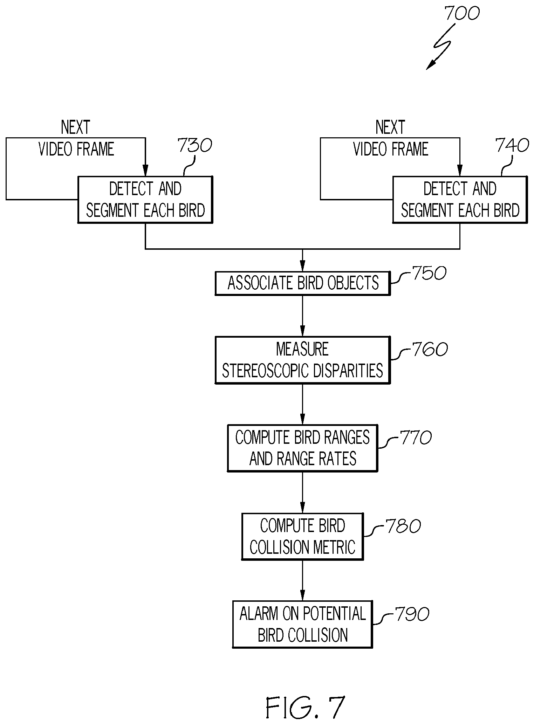

Referring to Fig. 7, a flow diagram 700 depicts an object detection and collision avoidance method in which no motion compensation method is implemented. In block 730, the left wing camera 21 continuously captures video frames of objects (e.g., birds in this example), and detects and segments the birds. Similarly, in block 740, the right wing camera 22 continuously captures video frames of the objects, and detects and segments the birds. After the left and right wing cameras 21, 22 detect and segment the birds, the bird objects are associated in block 750. Then, in block 760, stereoscopic disparities are measured.

Based upon the associated bird objects from block 750 and the stereoscopic disparities of the bird objects as measured in block 760, bird ranges and bird range rates are computed as shown in block 770. The process then proceeds to block 780 in which bird collision metrics are computed. If a potential bird collision is determined based upon the bird collision metrics computer in block 780, then an alarm is provided to an operator as shown in block 790.

The following additional description and explanations are provided with reference to the flow diagram 700 of Fig. 7. Since the two cameras 21, 22 provide stereo view, the entire view in front of the tip of each wing is processed so that almost every bird in view can be seen by both cameras 21, 22. As such, stereoscopic techniques may be used to estimate relative bird range ($BR_i$) and range rate ($BPR_i$) for the *ith* of N birds since stereoscopy allows each bird's range at each camera frame time to be calculated. The rate at which each bird is approaching the aircraft 30 can then be used to predict the number of bird collisions before any future time T based on the following simple collision indicator formula:

$$C(T) = \sum_{i \leq N} (\frac{BR_i}{BRR_i} < T)$$

As an example calculation for the above formula, *C(T)* can be calculated every video frame from the two cameras 21, 22 with T set to 10 seconds. The resulting integer C(10) could be used to drive an alarm which goes off when it increases from 0 to any non-zero value. The alarm increases in urgency as the number rises. Thus, the possibility of a large number of imminent bird collisions captures the fact that this event is much more likely to lead to engine failure or damage than if a single bird "collides".

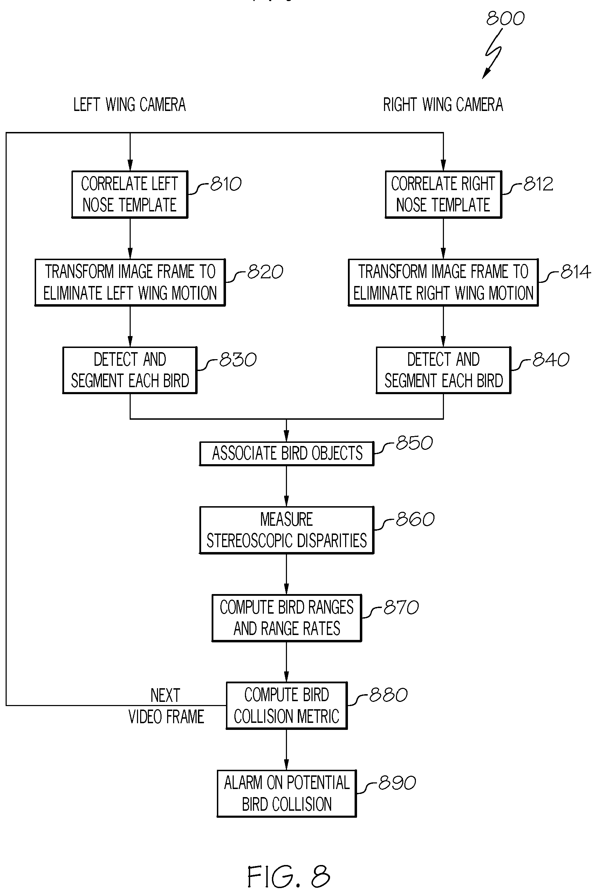

Referring to Fig. 8, a flow diagram 800 depicts the object detection and collision avoidance method of Fig. 7 in which a motion compensation method in accordance with an embodiment is implemented. In block 810, a left nose template is correlated. Then, in block 820, an image from the left wing camera 21 is transformed based upon the correlated nose template of block 810 to eliminate the left wing motion (both up/down vertical motion and clockwise/counter-clockwise twist motion). Similarly, in block 812, a right nose template is correlated. Then, in block 814, an image from the right wing camera 22 is transformed based upon the correlated nose template of block 812 to eliminate the right wing motion (both up/down vertical motion and clockwise/counter-clockwise twist motion).

The following additional description and explanations are provided with reference to the flow diagram 800 of Fig. 8. In order to associate bird objects between the two cameras 21, 22 and to calculate their disparity (i.e., the difference in apparent location of a given bird in the field of view of the two cameras 21, 22), the wing motion that causes relative locations of cameras to change need to be compensated. An apparatus including the motion compensation module 100 is described herein.

The front part of the aircraft 30 is visible from each camera (each sees one side) of the at least two cameras 21, 22. When the aircraft wings 31, 32 flex, the apparent location of the nose of the aircraft 30 changes. The change in apparent location of the nose of the aircraft 30 from the camera 22 can be tracked easily by constructing the right nose template and correlating captured images 24 from the camera 22 against the right nose template. The right nose template may comprise the captured image 510 shown in Fig. 5A, for example. The right nose template may comprise a black and white or color template, for example. Fig. 5B shows what happens with respect to the camera 22 on the right aircraft wing 32 with wing motion in an upward direction. Fig. 5C shows what happens with respect to the camera 22 on the right aircraft wing 32 with wing motion in a counter-clockwise twist.

When captured nose images 24 from the camera 22 are correlated, features of the aircraft 30, such as the features 43, 44, 45, 46, 47 shown in Fig. 4, are used in the correlation against the right nose template, as shown in block 812 in Fig. 8. The best features to correlate are those with large derivatives which all sum together to cause a correlation peak when the right nose template matches the current nose image.

The movement of the correlation peak determines the movement (displacement) in two dimensional pixel space. By adjusting the bird positions in pixels with the reverse of this displacement, their positions in pixel space in the camera 22 has been adjusted for the relative motion of the camera 22 due to the flexing movement of the right aircraft wing 32. This adjustment of the bird positions in pixel space is shown as the compensated image 540 in Fig. 6 described hereinabove.

The above-described correlation assumes that lens distortion of the camera 22 has been compensated for during a pre-calibration step. This calibration step allows the creation of a fixed function $p(\ )$ that maps pixel locations $(x, y)$ to solid angle vectors $(\theta, \phi)$, where $\theta$ is the angle in x-y space (the reference ground plane of the airplane) and $\phi$ is the elevation angle off of the reference ground plane of the airplane. This is denoted by the following function:

$$(\theta, \phi) = p(x, y)$$

The above function is defined during final installation of the object detection and collision avoidance system 10 and updated at periodic calibration intervals.

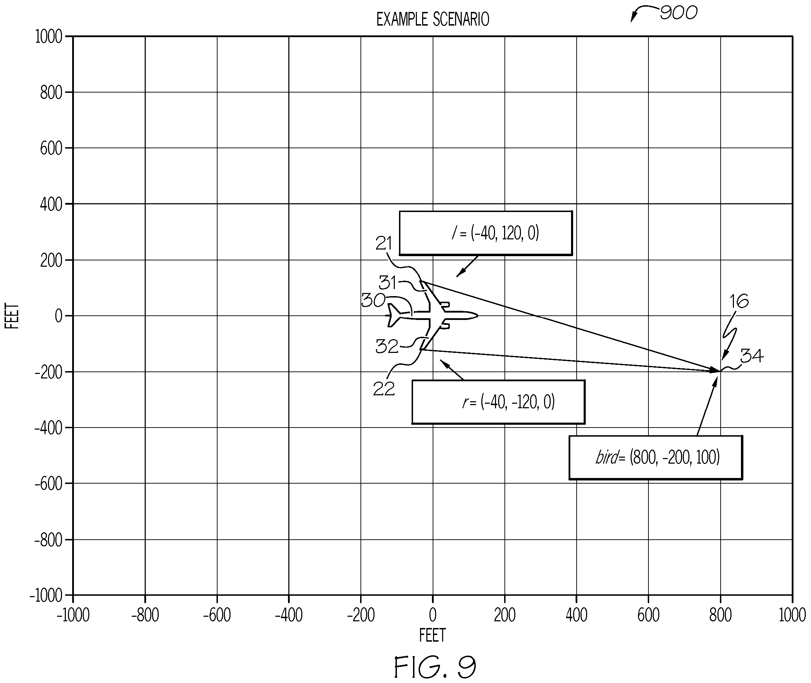

Referring to Fig. 9, a coordinates diagram 900 of an example scenario showing (x, y, z) showing distance coordinates of the object 16 (i.e., the bird 34 in this example) relative to the camera 21 mounted on the left aircraft wing 31 and the camera 22 mounted on the right aircraft wing 32. As shown in Fig. 9, it is assumed that the aircraft point of impact is at the center of the coordinates diagram 900 (i.e., at the (x, y, z) coordinates of (0, 0, 0).

As an example calculation of the above function $(\theta, \phi) = p(x, y)$, let $l = (l_x, l_y, 0)$ be the left camera 21 location (z is assumed to be zero) and $r = (r_x, r_y, 0)$ be the right camera 22 location on the tips of the wings 31, 32. As shown in Fig. 9, the following are the coordinates for $l$ and $r$:

$$l = (l_x, l_y, 0) = (-40, 120, 0)$$

$$r = (r_x, r_y, 0) = (-40, -120, 0)$$

Then, given a bird location in pixel space in each camera $(x_l, y_l)$ and $(x_r, y_r)$, their locations in physical space line along the lines formed by the angles $(\theta_l, \phi_l) = p(x_l, y_l)$ and $(\theta_r, \phi_r) = p(x_r, y_r)$ and points in space given by the camera locations. These two lines then are defined by the following one-dimensional parametric forms:

$$(l_x, l_y, 0) + (a_x, a_y, a_z)*s$$

$$(r_x, r_y, 0) + (b_x, b_y, b_z)*t$$

where the $a$ and $b$ direction vectors are determined by spherical to Cartesian coordinate conversion (using $p(\ )$):

$$a = (\cos(\phi_l)\cos(\theta_l), \cos(\phi_l)\sin(\theta_l), \sin(\phi_l))$$

$$b = (\cos(\phi_r)\cos(\theta_r), \cos(\phi_r)\sin(\theta_r), \sin(\phi_r))$$

$s$ = an unknown variable
$t$ = an unknown variable

The point of nearest intersection $c$ can be calculated as follows:
Let

$$m_2 = (b \times a) \cdot (b \times a)$$

$$R = (r - l) \times ((b \times a)/m_2)$$

where $m_2$ is the dot product of the cross product of the direction vectors *a* and *b*

$R$ is defined as indicated above
*r* is the direction vector for the right wing-mounted camera
*l* is the direction vector for the left wing-mounted camera

Also define the following variables:

$$t_1 = R \cdot b$$

$$t_2 = R \cdot a$$

$$q_1 = l + t_1 a$$

$$q_2 = l + t_2 a$$

The point of nearest intersection c is equal to the following:

$$c = \frac{q_1 + q_2}{2}$$

An example scenario showing example calculations of the above-identified equations is described hereinbelow with reference to coordinates shown in Fig. 9.
First, it is assumed that the aircraft 30 is centered at location (0, 0, 0), the bird 34 is at location (800, -200, 100), the camera 21 on the left aircraft wing 31 is at location (-40, -120, 0), and the camera 22 on the right aircraft wing 32 is at location (-40, -120, 0). For example 1001x1001 pixel cameras with no lens distortion, the following angles for the left camera 21 and the right camera 22 can be calculated as follows:

$$\theta_l = \tan^{-1}\left(\frac{bird_y - l_y}{bird_x - l_x}\right)$$

$$\theta_r = \tan^{-1}\left(\frac{bird_y - r_y}{bird_x - r_x}\right)$$

$$\phi_l = \tan^{-1}\left(\frac{bird_z - l_z}{\sqrt{(bird_x - l_x)^2 + (bird_y - l_y)^2}}\right)$$

$$\phi_r = \tan^{-1}\left(\frac{bird_z - r_z}{\sqrt{(bird_x - r_x)^2 + (bird_y - r_y)^2}}\right)$$

Second, it is assumed that each of the cameras 21, 22 has a 120 degrees field of view (FOV) in both horizontal and vertical directions. The pixel locations for the bird 34 in the left and right cameras 21, 22 can be expressed as follows:

$$\left(\frac{500\theta_l}{\theta_{FOV}}, \frac{500\phi_l}{\phi_{FOV}}\right)$$

$$\left(\frac{500\theta_r}{\theta_{FOV}}, \frac{500\phi_r}{\phi_{FOV}}\right)$$

Based upon the coordinates of the bird 34 and the cameras 21, 22 shown in Fig. 9, the above-identified pixel locations for the bird 34 in the left and right cameras 21, 22 are computed to be [-173.7872, 52.8997] and [-45.3361, 56.3223]. These pixel locations would be what an interpolated pixel location of an ideal camera would give. It should be noted that the previous pixel location calculations would not be done, but rather the bird 34 would be found within the pixel space of the camera image for each frame. The angles $\theta_l$, $\theta_r$, $\phi_l$, $\phi_r$ in degrees would be as follows: [-20.8545, -5.4403, 6.3480, 6.7587]

The normalized direction vectors $a$ and $b$ for the lines from the cameras 21, 22 to the bird 34 would be as follows:

$$a = [0.9288, \quad -0.3538, \quad 0.1106]$$

$$b = [0.9886, \quad -0.0942, \quad 0.1177]$$

Also, the calculations that compute the nearest point c between the two lines between the cameras 21, 22 and the bird 34 would be as follows:

$$m_2 = (b \times a) \cdot (b \times a) = 0.0698$$

$$R = (r - l) \times \left(\frac{b \times a}{m_2}\right) = (902.0990, \quad 0, \quad 107.3927)$$

$$t_1 = R \cdot b = 904.4335$$

$$t_2 = R \cdot a = 849.7058$$

$$q_1 = l + t_1 a = (800.0000, -200.0000, 100.0000)$$

$$q_2 = l + t_2 a = (800.0000, -200.0000, 100.0000)$$

Accordingly, the final resulting point (in this case the actual bird location) would be the midpoint c calculated as follows:

$$\frac{q_1 + q_2}{2} = (800.0000, -200.0000, 100.0000)$$

It should be noted that $q_1$ and $q_2$ are both the same and equal to the correct answer because there was no motion error (due to flexing of the aircraft wings 31, 32) introduced into the calculation as would be the case in a real system.

After the above-described wing motion error compensation is performed based upon blocks 810 and 820 for the left wing camera 21 and blocks 812 and 814 for the right wing camera 22, the process of Fig. 8 proceeds to blocks 830 and 840. In block 830 of Fig. 8, the left wing camera 21 continuously captures video frames of objects (e.g., birds in this example), and detects and segments the birds. Similarly, in block 840, the right wing camera continuously captures video frames of the birds, and detects and segments the birds. After the left and right wing cameras 21, 22 detect and segment the birds, the bird objects are associated in block 850. Then, in block 860, stereoscopic disparities are measured. Based upon the associated bird objects from block 850 and the stereoscopic disparities of the bird objects as measured in block 860, bird ranges and bird range rates are computed as shown in block 870.

More specifically, the bird range (i.e., *BR*) from the aircraft 30 can be calculated as norm of c or |c|, which gives the range of the bird to the center point (i.e., (0, 0, 0) between the wings 31, 32 of the aircraft 30. This can be calculated for each of the synchronized video frames of the cameras 21, 22. Thus, for example, a 30 Hz frame rate (i.e., *FR*) means a new range for each identified bird every 33.3ms. In general, the ranges $\{c_1, c_2, ...,\}$ allow the range rate (i.e., *BRR*) at every frame to be calculated using the following equation:

$$BRR_j = (c_j - c_{j-1})/FR$$

Predicted bird strike events at any future time can be calculated using the above equation for $BRR_j$.

The process of Fig. 8 then proceeds to block 880 in which bird collision metrics are computed. If a potential bird collision is determined based upon the bird collision metrics computed in block 880, then an alarm is provided to an operator as shown in block 890. However, if no potential bird collision is determined based upon the bird collision metrics computed in block 880, then the process returns back to block 810 and block 812 to process the next image frame for each of the left and right wing cameras 21, 22.

Coded instructions to implement the motion compensation method may be stored in a mass storage device, in a volatile memory, in a non-volatile memory, and/or on a removable tangible computer readable storage medium such as a CD or DVD.

The motion compensation method may be implemented using machine readable instructions that comprise a program for execution by a processor such as the processing unit 102 shown in the example motion compensation module 100 discussed above in connection with Fig. 1. The program may be embodied in software stored on a tangible computer readable storage medium such as a CD-ROM, a floppy disk, a hard drive, a digital versatile disk (DVD), a Blu-ray disk, or a memory associated with the processing unit 102, but the entire program and/or parts thereof could alternatively be executed by a device other than the processing unit 102 and/or embodied in firmware or dedicated hardware. Many other methods of implementing the example motion compensation module 100 may alternatively be used. The order of execution of blocks may be changed, and/or some of blocks described with reference to the example flow diagram 800 shown in Fig. 8 may be changed, eliminated, or combined.

As mentioned above, the example motion compensation method of Fig. 8 may be implemented using coded instructions (e.g., computer and/or machine readable instructions) stored on a tangible computer readable storage medium such as a hard disk drive, a flash memory, a read-only memory (ROM), a compact disk (CD), a digital versatile disk (DVD), a cache, a random-access memory (RAM) and/or any other storage device or storage disk in which information is stored for any duration (e.g., for extended time periods, permanently, for brief instances, for temporarily buffering, and/or for caching of the information). As used herein, the term tangible computer readable storage medium is expressly defined to include any type of computer readable storage device and/or storage disk and to exclude propagating signals and to exclude transmission media. As used herein, "tangible computer readable storage medium" and "tangible machine readable storage medium" are used interchangeably.

Additionally or alternatively, the example motion compensation method of Fig. 8 may be implemented using coded instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media. As used herein, when the phrase "at least" is used as the transition term in a preamble of a claim, it is open-ended in the same manner as the term "comprising" is open ended.

While an example manner of implementing the example aircraft-mounted object detection and collision avoidance system 10 is illustrated in Fig. 2, one or more of the elements, processes and/or devices illustrated in Fig. 2 may be combined, divided, re-arranged, omitted, eliminated and/or implemented in any other way. Further, the example motion compensation module 100 and/or, more generally, the example aircraft-mounted object detection and collision avoidance system 10 of Fig. 2 may be implemented by hardware, software, firmware and/or any combination of hardware, software and/or firmware. Thus, for example, any of the example motion compensation module 100 and/or, more generally, the example aircraft-mounted object detection and collision avoidance system 10 could be implemented by one or more analog or digital circuit(s), logic circuits, programmable processor(s), application specific integrated circuit(s) (ASIC(s)), programmable logic device(s) (PLD(s)) and/or field programmable logic device(s) (FPLD(s)).

When reading any of the apparatus or system claims of this patent to cover a purely software and/or firmware implementation, at least one of the example motion compensation module 100 and/or, more generally, the example aircraft-mounted object detection and collision avoidance system 10 is/are hereby expressly defined to include a tangible computer readable storage device or storage disk such as a memory, a digital versatile disk (DVD), a compact disk (CD), a Blu-ray disk, etc. storing the software and/or firmware.

The mounting of the two cameras 21, 22 at the ends of the wings 31, 32 provides an unobstructed view and a long baseline (i.e., the distance between the two cameras 21, 22) for accurate distance measurement. However, as the wings 31, 32 flex, the cameras 21, 22 move, and the accurate baseline needed for distance measurement is lost. By providing the motion compensation module 100, the relative motion of the cameras 21, 22 is accounted for so that the baseline can be maintained during flight including takeoff, turning, and landing.

Also, the mounting of the two cameras 21, 22 at the ends of the wings 31, 32 allows stereo measurements in real time. These real-time stereo measurements allow the two cameras 21, 22 to focus in on an object, obtain a three-dimensional view, and obtain accurate measurements of the object. The motion compensation module 100 provides a real-time way to calculate the distance between the two cameras 21, 22 whose distance is changing due to wing vibration, for example. The calculated distance between the two cameras 21, 22 is then used to calculate the distance between the aircraft 30 and an approaching object to be avoided.

Although the above description describes the object to be avoided by the aircraft 30 is in the air, it is conceivable that the object to be avoided by the aircraft be an object that is not in the air, such as an object on a runway for example.

Also, although the above description describes the image capture module 20 as having only two cameras, it is conceivable that more than two cameras be used. However, the use of more than two cameras would provide shorter baselines that lead to less accurate distance measurements. For example, a third camera (not shown) can be mounted on a portion of the aircraft 30. The processing unit 102 (Fig. 2) can be configured to execute instructions of the motion compensation program 105 to compensate for motions in the real-time distance between the left camera 21 and the third camera, motions in the real-time distance between the right camera 22 and the third camera, or both. The detection module can be configured to calculate a distance between the aircraft 30 and the object 16 based upon at least one of the calculated real-time distance between the left camera 21 and the right camera 22, the calculated real-time distance between the left camera 21 and the third camera, and the calculated real-time distance between the right camera 22 and the third camera.

Although various embodiments of the disclosed apparatus and motion compensation methods have been shown and described, modifications may occur to those skilled in the art upon reading the specification. The present application includes such modifications and is limited only by the scope of the claims.

## Claims

1. A method of calculating a distance between an aircraft and an object based upon a calculated real-time distance between a first camera and a second camera, the method comprising:
   calculating a real-time distance between a first wing-mounted camera on an aircraft and a second wing-mounted camera on the aircraft, wherein calculating comprises:

   determining a first distance and orientation between the first wing (31) mounted camera (21) and the second wing (32)-mounted camera (22) during a neutral wing (31,32) condition of the aircraft (30);
   correlating images (24) captured from the first wing (31) mounted camera (21) during a flexed wing condition of the aircraft against a left nose template; correlating images (24) captured from the second wing (32)-mounted camera (22) during a flexed wing condition of the aircraft against a right nose template, wherein the captured images show the nose of the aircraft;
   determining a second distance and orientation between the first wing (31)-mounted camera (21) and the second wing (32)-mounted camera (22) during a flexed wing (31, 32) condition of the aircraft; and
   processing the difference between the first and second distances and orientations to provide a real-time distance and orientation between the first and second wing (31, 32)-mounted cameras (21, 22).

2. The method according to Claim 1 further comprising transforming the correlated images (24) associated with the first wing (31) -mounted camera (21) to eliminate left wing (31) motion.

3. The method according to Claim 1 further comprising transforming the correlated images (24) associated with the second wing (32)-mounted camera (22) to eliminate right wing (32) motion.

4. The method according to any preceding Claim, wherein the method is performed by a computer having a memory executing one or more programs of instructions which are tangibly embodied in a program storage medium readable by the computer.

5. An apparatus for an aircraft-mounted object (16) detection and collision avoidance system (10) the apparatus comprising:

a first camera (21) mountable on an aircraft wing;
a second camera (22) mountable on an aircraft wing, wherein the first and second cameras (21, 22) are configured to capture images of the aircraft nose and configured to cooperate to capture images (24) of an object (16) in a flight path (18);
a motion compensation module (100) configured to calculate a real-time distance and orientation between the first camera (21) and the second camera (22) by:

determining a first distance and orientation between the first wing (31) mountable camera (21) and the second wing (32) -mountable camera (22) during a neutral wing (31, 32) condition of the aircraft (30);
correlating images (24) captured from the first wing (31)-mountable camera (21) during a flexed wing condition of the aircraft against a left nose template;
correlating images (24) captured from the second wing (32)-mountable camera (22) during a flexed wing condition of the aircraft against a right nose template, wherein the captured images show the nose of the aircraft;
determining a second distance and orientation between the first wing (31)-mountable camera (21) and the second wing (32)-mountable camera (22) during a flexed wing (31, 32) condition of the aircraft; and
processing the difference between the first and second distances and orientations to provide a real-time varying distance and orientation between the first camera (21) and the second camera (21, 22); and a detection module (50) configured to calculate a distance and an orientation between the aircraft 30 and the object 16 based upon the calculated real-time distance and orientation between the first camera (21) and the second camera (22)

6. The apparatus according to Claim 5, wherein each of the first and second cameras (21, 22) comprises a stereovision camera.

7. The apparatus according to Claim 5 or Claim 6, wherein the motion compensation module (100) includes a data storage unit (104) in which a motion compensation program is stored and a processing unit (102) configured to execute instructions of the motion compensation program to compensate for variations in the real-time distance and orientation between the first and second cameras (21, 22)

8. The apparatus according to Claim 7, wherein the processing unit (102) is configured to execute instructions of the motion compensation program to compensate for motions in the real-time distance and orientation between the first and second cameras (21, 22) due to flexing of one or more aircraft (30) wings (31,32)

9. The apparatus according to Claim 8, further comprising a third camera configured to be mounted a portion of the aircraft (30), wherein the processing unit (102) is configured to execute instructions of the motion compensation program to compensate for motions in the real-time distance and orientation between the first and third cameras motions in the real-time distance and orientation between the second and third cameras or both.

10. The apparatus according to Claim 9, wherein the detection module (50) is configured to calculate a distance between the aircraft (30) and the object (16) based upon at least one of the calculated real-time distance and orientation between the first camera (21) and the second camera (22) the calculated real-time distance and orientation between the first camera (21) and the third camera and the calculated real-time distance and orientation between the second camera (22) and the third camera.

11. The apparatus according to any one of Claims 5-10, wherein the flight path (18) comprises an airway path (18) in the air or a runway path (18) on the ground

**Patentansprüche**

1. Verfahren zum Berechnen einer Distanz zwischen einem Flugzeug und einem Objekt basierend auf einer berechneten Echtzeitdistanz zwischen einer ersten Kamera und einer zweiten Kamera, wobei das Verfahren aufweist: Berechnen einer Echtzeitdistanz zwischen einer an einem ersten Flügel an einem Flugzeug angebrachten Kamera und einer an einem zweiten Flügel an dem Flugzeug angebrachten Kamera, wobei das Berechnen aufweist:

   Bestimmen einer ersten Distanz und Ausrichtung zwischen der an dem ersten Flügel (31) angebrachten Kamera (21) und der an dem zweiten Flügel (32) angebrachten Kamera (22) während eines neutralen Flügel (31, 32) -Zustands des Flugzeugs (30);
   Abgleichen der von der an dem ersten Flügel (31) angebrachten Kamera (21) aufgenommenen Bilder (24) während eines gebogenen Flügelzustands des Flugzeugs mit einer linken Bugschablone;
   Abgleichen der von der an dem zweiten Flügel (32) angebrachten Kamera (22) aufgenommenen Bilder (24) während eines gebogenen Flügelzustands des Flugzeugs mit einer rechten Bugschablone, wobei die aufgenommenen Bilder den Bug des Flugzeugs zeigen;
   Bestimmen einer zweiten Distanz und Ausrichtung zwischen der an dem ersten Flügel (31) angebrachten Kamera (21) und der an dem zweiten Flügel (32) angebrachten Kamera (22) während eines gebogenen Flügel (31, 32) -Zustands des Flugzeugs; und
   Verarbeiten der Differenz zwischen der ersten und der zweiten Distanzen und Ausrichtungen, um eine Echtzeitdistanz und -ausrichtung zwischen den an dem ersten Flügel und dem zweiten Flügel (31, 32) angebrachten Kameras (21, 22) bereitzustellen.

2. Verfahren nach Anspruch 1, das des Weiteren das Umwandeln der korrelierten Bilder (24), die zu der an dem ersten Flügel (31) angebrachten Kamera (21) gehören, aufweist, um Bewegung des linken Flügels (31) zu beseitigen.

3. Verfahren nach Anspruch 1, das des Weiteren das Umwandeln der korrelierten Bilder (24), die zu der an dem zweiten Flügel (32) angebrachten Kamera (22) gehören, aufweist, um Bewegung des rechten Flügels (32) zu beseitigen.

4. Verfahren nach einem der vorhergehenden Ansprüche, wobei das Verfahren von einem Computer durchgeführt wird, der einen Speicher hat, welcher ein oder mehrere Befehlsprogramme ausführt, die konkret in einem Programmspeichermedium enthalten sind, das von dem Computer lesbar ist.

5. Vorrichtung für ein an einem Flugzeug angebrachtes Objekt (16)

   - Erkennungs- und -Kollisionsvermeidungssystem (10), wobei die Vorrichtung aufweist:

   eine erste Kamera (21), die an einem Flugzeugflügel anbringbar ist;
   eine zweite Kamera (22), die an einem Flugzeugflügel anbringbar ist, wobei die erste und die zweite Kamera (21, 22) dazu konfiguriert sind, Bilder des Flugzeugbugs aufzunehmen, und dazu konfiguriert sind zusammenzuwirken, um Bilder eines Objekts (16) in einem Flugweg (18) aufzunehmen;
   ein Bewegungskompensationsmodul (100), das dazu konfiguriert ist, eine Echtzeitdistanz und -ausrichtung zwischen der ersten Kamera (21) und der zweiten Kamera (22) zu berechnen durch:

   Bestimmen einer ersten Distanz und Ausrichtung zwischen der an dem ersten Flügel (31) anbringbaren Kamera (21) und der an dem zweiten Flügel (32) anbringbaren Kamera (22) während eines neutralen Flügel (31, 32) -Zustands des Flugzeugs (30);
   Abgleichen der von der an dem ersten Flügel (31) anbringbaren Kamera (21) aufgenommenen Bilder (24) während eines gebogenen Flügelzustands des Flugzeugs mit einer linken Bugschablone;
   Abgleichen der von der an dem zweiten Flügel (32) anbringbaren Kamera (22) aufgenommenen Bilder (24) während eines gebogenen Flügelzustands des Flugzeugs mit einer rechten Bugschablone, wobei die aufgenommenen Bilder den Bug des Flugzeugs zeigen;
   Bestimmen einer zweiten Distanz und Ausrichtung zwischen der an dem ersten Flügel (31) anbringbaren Kamera (21) und der an dem zweiten Flügel (32) anbringbaren Kamera (22) während eines gebogenen Flügel (31, 32) -Zustands des Flugzeugs; und
   Verarbeiten der Differenz zwischen der ersten und der zweiten Distanzen und Ausrichtungen, um eine in Echtzeit variierende Distanz und Ausrichtung zwischen der ersten und der zweiten Kamera (21, 22) bereitzustellen; und

ein Detektionsmodul (50), das dazu konfiguriert ist, eine Distanz und eine Ausrichtung zwischen dem Flugzeug (30) und dem Objekt (16) basierend auf der berechneten Echtzeitdistanz und -ausrichtung zwischen der ersten Kamera (21) und der zweiten Kamera (22) zu berechnen.

**6.** Vorrichtung nach Anspruch 5, wobei jede der ersten und der zweiten Kamera (21, 22) eine Stereo-Vision-Kamera aufweist.

**7.** Vorrichtung nach Anspruch 5 oder Anspruch 6, wobei das Bewegungskompensationsmodul (100) eine Datenspeichereinheit (104) aufweist, in der ein Bewegungskompensationsprogramm gespeichert ist, und eine Verarbeitungseinheit (102), die dazu konfiguriert ist, Befehle des Bewegungskompensationsprogramms auszuführen, um Variationen der Echtzeitdistanz und -ausrichtung zwischen der ersten und der zweiten Kamera (21, 22) zu kompensieren.

**8.** Vorrichtung nach Anspruch 7, wobei die Verarbeitungseinheit (102) dazu konfiguriert ist, Befehle des Bewegungskompensationsprogramms auszuführen, um Bewegungen in der Echtzeitdistanz und -ausrichtung zwischen der ersten und der zweiten Kamera (21, 22) aufgrund des Biegens eines oder mehrerer Flügel (31, 32) des Flugzeugs (30) zu kompensieren.

**9.** Vorrichtung nach Anspruch 8, die des Weiteren eine dritte Kamera aufweist, die dazu konfiguriert ist, an einem Abschnitt des Flugzeugs (30) angebracht zu werden, wobei die Verarbeitungseinheit (102) dazu konfiguriert ist, Befehle des Bewegungskompensationsprogramms auszuführen, um Bewegungen in der Echtzeitdistanz und -ausrichtung zwischen der ersten und der dritten Kamera, Bewegungen in der Echtzeitdistanz und -ausrichtung zwischen der zweiten und der dritten Kamera, oder beides zu kompensieren.

**10.** Vorrichtung nach Anspruch 9, wobei das Detektionsmodul (50) dazu konfiguriert ist, eine Distanz zwischen dem Flugzeug (30) und dem Objekt (16) basierend auf wenigstens einem von der berechneten Echtzeitdistanz und -ausrichtung zwischen der ersten Kamera (21) und der zweiten Kamera (22), der berechneten Echtzeitdistanz und -ausrichtung zwischen der ersten Kamera (21) und der dritten Kamera und der berechneten Echtzeitdistanz und -ausrichtung zwischen der zweiten Kamera (22) und der dritten Kamera zu berechnen.

**11.** Vorrichtung nach einem der Ansprüche 5-10, wobei der Flugweg (18) eine Luftstraße (18) in der Luft oder eine Start- und Landebahn (18) am Boden aufweist.

**Revendications**

**1.** Procédé de calcul d'une distance, entre un avion et un objet, basé sur une distance en temps réel calculée entre une première caméra et une deuxième caméra, ledit procédé consistant :
à calculer une distance en temps réel entre une première caméra montée sur l'aile d'un avion et une deuxième caméra montée sur l'aile de l'avion, où le calcul consiste :

à déterminer une première distance et orientation entre la première caméra (21) montée sur l'aile (31) et la deuxième caméra (22) montée sur l'aile (32), pendant un état neutre des ailes (31, 32) de l'avion (30) ;
à corréler des images (24) capturées par la première caméra (21) montée sur l'aile (31), pendant un état de flexion de l'aile de l'avion, ladite corrélation étant effectuée par rapport à un gabarit gauche du nez ;
à corréler des images (24) capturées par la deuxième caméra (22) montée sur l'aile (32), pendant un état de flexion de l'aile de l'avion, ladite corrélation étant effectuée par rapport à un gabarit droit du nez, où les images capturées montrent le nez de l'avion ;
à déterminer une deuxième distance et orientation entre la première caméra (21) montée sur l'aile (31) et la deuxième caméra (22) montée sur l'aile (32), pendant un état de flexion des ailes (31, 32) de l'avion ; et
à traiter la différence entre les première et deuxième distances et orientations, afin de fournir une distance et une orientation en temps réel entre les première et deuxième caméras (21, 22) montées sur les ailes (31, 32).

**2.** Procédé selon la revendication 1, consistant en outre à transformer les images corrélées (24), associées à la première caméra (21) montée sur l'aile (31), afin d'éliminer le mouvement de l'aile gauche (31).

**3.** Procédé selon la revendication 1, consistant en outre à transformer les images corrélées (24), associées à la deuxième caméra (22) montée sur l'aile (32), afin d'éliminer le mouvement de l'aile droite (32).

4. Procédé selon l'une quelconque des revendications précédentes, où le procédé est mis en œuvre par un ordinateur ayant une mémoire exécutant un ou plusieurs programmes d'instructions qui sont intégrés de manière tangible dans un support de mémorisation de programme pouvant être lu par l'ordinateur.

5. Appareil pour un système de détection et d'évitement de collision (10) avec un objet (16), ledit appareil étant monté sur un avion et comprenant :

une première caméra (21) pouvant être montée sur une aile d'avion ;
une deuxième caméra (22) pouvant être montée sur une aile d'avion, où les première et deuxième caméras (21, 22) sont configurées pour capturer des images du nef de l'avion et configurées pour coopérer, afin de capturer des images (24) d'un objet (16) se trouvant sur une trajectoire de vol (18) ;
un module de compensation de mouvements (100) configuré pour calculer une distance et une orientation en temps réel entre la première caméra (21) et la deuxième caméra (22) :

en déterminant une première distance et orientation entre la première caméra (21) pouvant être montée sur l'aile (31) et la deuxième caméra (22) pouvant être montée sur l'aile (32), pendant un état neutre des ailes (31, 32) de l'avion (30) ;
en corrélant des images (24) capturées par la première caméra (21) pouvant être montée sur l'aile (31), pendant un état de flexion de l'aile de l'avion, ladite corrélation étant effectuée par rapport à un gabarit gauche du nez ;
en corrélant des images (24) capturées par la deuxième caméra (22) pouvant être montée sur l'aile (32), pendant un état de flexion de l'aile de l'avion, ladite corrélation étant effectuée par rapport à un gabarit droit du nez, où les images capturées montrent le nez de l'avion ;
en déterminant une deuxième distance et orientation entre la première caméra (21) pouvant être montée sur l'aile (31) et la deuxième caméra (22) pouvant être montée sur l'aile (32), pendant un état de flexion des ailes (31, 32) de l'avion ; et
en traitant la différence entre les première et deuxième distances et orientations, afin de fournir une distance et une orientation variant en temps réel entre la première caméra (21) et la deuxième caméra (22) ; et

comprenant un module de détection (50) configuré pour calculer une distance et une orientation entre l'avion (30) et l'objet (16), en se basant sur la distance et l'orientation en temps réel calculées entre la première caméra (21) et la deuxième caméra (22).

6. Appareil selon la revendication 5, dans lequel chacune des première et deuxième caméras (21, 22) comprend une caméra stéréoscopique.

7. Appareil selon la revendication 5 ou la revendication 6, dans lequel le module de compensation de mouvements (100) comprend une unité de mémorisation de données (104) dans laquelle est mémorisé un programme de compensation de mouvements, et comprend une unité de traitement (102) configurée pour exécuter des instructions du programme de compensation de mouvements, afin de compenser des variations concernant la distance et l'orientation en temps réel entre les première et deuxième caméras (21, 22).

8. Appareil selon la revendication 7, dans lequel l'unité de traitement (102) est configurée pour exécuter des instructions du programme de compensation de mouvements, afin de compenser des mouvements concernant la distance et l'orientation en temps réel entre les première et deuxième caméras (21, 22), lesdits mouvements étant dus à la flexion d'une ou de plusieurs ailes (31, 32) de l'avion (30).

9. Appareil selon la revendication 8, comprenant en outre une troisième caméra configurée pour être montée sur une partie de l'avion (30), où l'unité de traitement (102) est configurée pour exécuter des instructions du programme de compensation de mouvements, afin de compenser des mouvements concernant la distance et l'orientation en temps réel entre les première et troisième caméras, des mouvements concernant la distance et l'orientation en temps réel entre les deuxième et troisième caméras, ou les deux.

10. Appareil selon la revendication 9, dans lequel le module de détection (50) est configuré pour calculer une distance entre l'avion (30) et l'objet (16), en se basant au moins sur l'une ou l'autre des distance et orientation en temps réel calculées entre la première caméra (21) et la deuxième caméra (22), des distance et orientation en temps réel calculées entre la première caméra (21) et la troisième caméra, et des distance et orientation en temps réel calculées entre la deuxième caméra (22) et la troisième caméra.

**11.** Appareil selon l'une quelconque des revendications 5 à 10, dans lequel la trajectoire de vol (18) comprend, dans les airs, une trajectoire de route aérienne (18) et, au sol, une trajectoire de piste (18).

FIG. 1

*10*

*20*

IMAGE CAPTURE MODULE

AT LEAST TWO CAMERAS —*21, 22*

IMAGES —*24*

VIDEO IMAGES —*26*

*100*

MOTION COMPENSATION MODULE

| INPUT/OUTPUT UNIT | PROCESSING UNIT | DATA STORAGE UNIT |

—*105*

*106*      *102*      *104*

DETECTION MODULE —*50*

FIG. 2

FIG. 3

FIG. 4

30

32

510

512

514

## FIG. 5A

30

A

32

520

512

514

516

B

d

## FIG. 5B

FIG. 5C

FIG. 6

FIG. 7

*800*

LEFT WING CAMERA                    RIGHT WING CAMERA

CORRELATE LEFT
NOSE TEMPLATE —*810*

CORRELATE RIGHT
NOSE TEMPLATE —*812*

TRANSFORM IMAGE FRAME TO
ELIMINATE LEFT WING MOTION —*820*

TRANSFORM IMAGE FRAME TO
ELIMINATE RIGHT WING MOTION —*814*

DETECT AND
SEGMENT EACH BIRD —*830*

DETECT AND
SEGMENT EACH BIRD —*840*

ASSOCIATE BIRD OBJECTS —*850*

MEASURE
STEREOSCOPIC DISPARITIES —*860*

COMPUTE BIRD RANGES
AND RANGE RATES —*870*

NEXT
VIDEO FRAME

COMPUTE BIRD
COLLISION METRIC —*880*

ALARM ON POTENTIAL
BIRD COLLISION —*890*

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102008024308
- DE 102008046545
- EP 1087626 A
- US 5581250 A
- US 2011184647 A
- US 2015329217 A